**Europäisches Patentamt**

**European Patent Office**

**Office européen des brevets**

(19)

(11) Veröffentlichungsnummer : **0 079 431 B2**

## (12) NEUE EUROPÄISCHE PATENTSCHRIFT

(45) Veröffentlichungstag der neuen Patentschrift :
29.04.92 Patentblatt 92/18

(51) Int. Cl.⁵ : **D03D 1/00**

(21) Anmeldenummer : **82107514.0**

(22) Anmeldetag : **18.08.82**

(54) **Einlagiges Papiermaschinensieb.**

(30) Priorität : **15.11.81 CH 7331/81**

(43) Veröffentlichungstag der Anmeldung :
**25.05.83 Patentblatt 83/21**

(45) Bekanntmachung des Hinweises auf die
Patenterteilung :
**31.07.85 Patentblatt 85/31**

(45) Bekanntmachung des Hinweises auf die
Entscheidung über den Einspruch :
**29.04.92 Patentblatt 92/18**

(84) Benannte Vertragsstaaten :
**AT CH DE FR GB IT LI NL SE**

(56) Entgegenhaltungen :
**EP-A- 0 008 180**
**EP-A- 0 055 469**
**DE-A- 2 502 466**

(56) Entgegenhaltungen :
**DE-A- 2 517 228**
**DE-A- 2 706 235**
**FI-A- 770 291**
**FI-A- 783 811**
**FI-C- 63 271**
**GB-A- 1 572 905**
**US-A- 4 231 401**
**"Advanced Textile Design" W. Watson, Long-**
**smans, Green and Co., London, 1925, pp. 9-12**

(73) Patentinhaber : **Siebtuchfabrik AG**
**Basler Strasse 30/3**
**CH-4600 Olten 3 (CH)**

(72) Erfinder : **Vuorio, Tauno A.**
**Sälistrasse 80**
**CH-4600 Olten (CH)**

(74) Vertreter : **Paul, Dieter-Alfred, Dipl.-Ing.**
**Fichtestrasse 18**
**W-4040 Neuss 1 (DE)**

EP 0 079 431 B2

## Beschreibung

Die Erfindung betrifft ein einlagiges Papiermaschinensieb, das aus Längs- und Querfäden aus Kunststoff gewebt ist, wobei zwei Gruppen von Querfäden vorgesehen sind, die in der ersten Gruppe einen kürzeren Bindungsrapport als in der zweiten Gruppe haben und wobei sich in Längsfadenrichtung gesehen eine bestimmte Anzahl von Querfäden der ersten Gruppe mit einer bestimmten Anzahl von Querfäden der zweiten Gruppe abwechseln, wobei die zweite Gruppe von Querfäden einen Bindungsrapport bzw. Bindungsrapport hat, der bzw. die sich insgesamt über zumindest einen Längsfaden mehr erstreckt bzw. erstrecken als der Bindungsrapport bzw. die Bindungsrapporte der ersten Gruppe von Querfäden und die Querfäden der zweiten Gruppe die Mehrzahl der innerhalb eines Bindungsrapportes liegenden Längsfäden an deren Unterseite kreuzen.

Einlagige Papiermaschinensiebe werden aus in Papiermaschinenlaufrichtung verlaufenden Längsfäden und aus quer dazu verlaufenden Querfäden gewebt. Normalerweise sind - ausgehend vom Webprozeß - die Längsfäden auch die Kettfäden und die Querfäden die Schußfäden.

Die Längsfäden sind mit den Querfäden im allgemeinen so verwebt, daß sich die Bindungsmuster in bestimmten Abständen wiederholen, d. h. das Bindungsmuster der Längsfäden nach einer bestimmten Anzahl von Querfäden und deren Bindungsmuster nach einer bestimmten Anzahl. von Längsfäden. Man spricht dann von einem Bindungsrapport der Längs- und von einem Bindungsrapport der Querfäden.

Innerhalb eines Bindungsrapportes verläuft beispielsweise ein Querfaden zunächst auf der einen Seite des Papiermaschinensiebes, geht dann durch dieses hindurch und verläuft anschließend auf der anderen Seite des Papiermaschinensiebes. Dabei kann der Querfaden auf einer oder auch auf beiden Seiten hintereinander über mehrere Längsfäden gehen, bevor er die Seite wechselt. In diesem Fall werden also nicht nur ein Längsfaden, sondern eine entsprechende Anzahl. davon gemeinsam eingebunden. Die Summe der auf beiden Seiten eines Papiermaschinensiebes innerhalb eines Bindungsrapportes gekreuzten Längsfäden bestimmt die Länge des Bindungsrapportes der Querfäden.

Bei einem Papiermaschinensieb wird die Seite, auf der das Papierblatt gebildet wird, als die Oberseite, und die Seite, auf der das Sieb über die Walzen und Absaugeinrichtungen verläuft, als die Unterseite bezeichnet.

Ein Papiermaschinensieb der eingangs genannten Art ist in der GB-A-1 572 905 beschrieben. Es kann einlagig ausgebildet sein, ist aber vorzugsweise als Semi-Duplex-Gewebe ausgeführt. An der Gewebeunter- und-/oder Gewebeoberseite sind zusätzliche Querfäden vorgesehen, die über den Gewebekörper vorstehen und dort auch eine eigene Ebene bilden können. Diese zusätzlichen Querfäden dienen in erster Linie der Verbesserung der Lebensdauer, haben jedoch zur Folge, daß sich die Fadendichte an der Siebunterseite erhöht, wodurch sich die Wasserdurchlässigkeit verschlechtert.

In der US-A-4 231 401 ist ein einlagiges Papiermaschinensieb beschrieben, bei dem die Querfäden in zwei Gruppen mit jeweils unterschiedlich Langem Bindungsrapport aufgeteilt werden können. Die erste Gruppe von Querfäden hat einen über insgesamt vier Längsfäden gehenden Bindungsrapport, während die Querfäden in der zweiten Gruppe innerhalb eines Bindungsrapportes acht Längsfäden kreuzen. Dabei wechseln sich immer zwei Querfäden der einen mit zwei Querfäden der zweiten Gruppe ab. Erzielt wird dieses unregelmäßige Webmuster durch Kombination von insgesamt vier Grundwebmustern.

Das Ziel dieser Ausbildung des Papiermaschinensiebes besteht darin, das bei regelmäßigen Webmustern auftretende Versetzen der Querfäden mit der Folge, daß sich zwei benachbarte Querfäden annähern, zu vermeiden. Diese Versetzungen haben nämlich zur Folge, daß die Gewebelücken für den Durchtritt der Flüssigkeit unterschiedlich groß werden, wodurch die Entwässerung beeinträchtigt wird.

Nachteilig bei diesem Papiermaschinensieb wie auch grundsätzlich bei Papiermaschinensieben mit relativ kleinem Bindungsrapport ist, daß sie nur einen relativ geringen Abriebwiderstand haben, da insbesondere die Querfäden durch ihren häufigen Seitenwechsel relativ stark gekröpft sind, das Sieb also nur auf diesen Kröpfungen aufliegt. Sie verschleißen deshalb relativ schnell. Dies trifft insbesondere auf das Papiermaschinensieb nach der US-A-4 231 401 zu, da hier die Querfäden nur jeweils einen Längsfaden an der Unterseite kreuzen, die Querfäden also praktisch nur punktförmig aufliegen. Die Längsfäden flotieren an der Unterseite zwar ein wenig Länger. Sie sind jedoch für die Auflage und damit für die Beaufschlagung durch Abrieb wenig geeignet, da sie im Gegensatz zu den Querfäden unter vergleichsweise hoher Spannung stehen.

Ausgehend von dem gattungsgemäßen Papiermaschinensieb liegt der Erfindung die Aufgabe zugrunde, ein Papiermaschinensieb zu schaffen, das sich einerseits durch geringe Markierneigung bei guter Faserretention und andererseits durch gute Entwässerungseigenschaften trotz hoher Abriebfestigkeit auszeichnet.

Diese Aufgabe wird erfindungsgemäß dadurch gelöst, daß die erste Gruppe von Querfäden einen Bindungsrapport bzw. Bindungsrapporte hat, der bzw. die sich insgesamt über maximal. fünf Längsfäden erstreckt bzw. erstrecken, daß die Querfäden der zweiten Gruppe einen größeren Querschnitt als die der ersten Gruppe aufweisen und daß das freie innere Volumen des Papiermaschinensiebes zumindest 50% des Siebkörpervolumens ausmacht.

Auf Grund dieser Ausbildung hat das erfindungsgemäße Papiermaschinensieb eine Reihe von Vorteilen. Wegen der Begrenzung des die Sieboberfläche bildenden Gewebeaufbaues auf einen Maximalrapport der Querfäden wird einerseits eine gute Retention ohne große Markierung gewährleistet, andererseits ist aber noch ein zügiger Wasserabfluß durch die Gewebelage gegeben. Durch die Erhöhung des freien inneren Volumens wird im Siebkörper eine freie, horizontale Durchströmmöglichkeit geschaffen, die die Entwässerung wesentlich erhöht und auch zu einer Verringerung des Verbrauchs an Siebantriebsenergie führt. Außerdem werden die beim Abstreifvorgang an den Foilkanten auftretenden Druckimpulse und die hierdurch bewirkenden dynamischen Markierungen stark verringert. Die Langflotierenden Querfäden der zweiten Gruppe sorgen gleichzeitig für hohe Verschleißfestigkeit.

Das Sieb ist also für die Herstellung hochwertiger Papiere geeignet und hat trotzdem eine relativ hohe Lebensdauer. Nebenbei werden durch die Schabwirkung der Langgezogenen Kröpfungen Papierfaseransammlungen auf den Saugkästen, Siebleitelementen und dergleichen vermieden und der Wasserabfluß verbessert. Insgesamt weist das erfindungsgemäße Papiermaschinensieb Eigenschaften auf, die bisher bei den bekannten Sieben nur durch das Vorsehen mehrerer Lagen und damit unter Inkaufnahme anderer Nachteile miteinander zu kombinieren waren.

In Ausbildung der Erfindung ist vorgesehen, daß die Querfäden der zweiten Gruppe einen Bindungsrapport bzw. Bindungsrapporte haben, der bzw. die sich insgesamt über zumindest sechs Längsfäden erstreckt bzw. erstrecken, wobei diese Querfäden innerhalb eines Bindungsrapportes vorzugsweise nur einen Längsfaden an dessen Oberseite kreuzen. Die überwiegende Mehrzahl. der Längsfäden soll von dieser Gruppe der Querfäden demgemäß an der Unterseite gekreuzt werden, damit möglichst große Berührungsflächen bei der Auflage des Papiermaschinensiebes auf Führungseinrichtungen und dergleichen geschaffen werden. Zumindest diese Gruppe der Querfäden soll nacheinander fünf Längsfäden an der Unterseite kreuzen.

Für besonders markierarme Blattbildung ist es empfehlenswert, daß die Querfäden der ersten Gruppe einen sich nur über insgesamt zwei Längsfäden erstreckenden Bindungsrapport haben, da dann an der Oberseite besonders viele Querfadenkröpfungen vorhanden sind. Dagegen sollten die Querfäden der zweiten Gruppe einen sich über insgesamt acht bis zwölf Längsfäden gehenden Bindungsrapport haben.

Nach einem weiteren Merkmal. der Erfindung ist vorgesehen, daß an den Stellen, an denen ein Querfaden der zweiten Gruppe einen Längsfaden an der Oberseite kreuzt, zumindest ein benachbarter Querfaden der ersten Gruppe, der nach dem Bindungsrapport an sich diesen Längsfaden ebenfalls an der Oberseite kreuzen müßte, unter diesem Längsfaden geführt ist. Auf diese Weise wird vermieden, daß derselbe Längsfaden an seiner Oberseite von zwei nebeneinanderliegenden Querfäden eingebunden wird, was zu unerwünschten Markierungen führen würde.

Damit eine gleichmäßige Oberfläche erzielt wird, sieht die Erfindung vor, daß sich in Längsfadenrichtung gesehen höchstens zwei Querfäden der ersten Gruppe mit höchstens zwei Querfäden der zweiten Gruppe abwechseln.

Nach der Erfindung kann ferner vorgesehen sein, daß die Querfäden der zweiten Gruppe - bei fiktiver Weglassung der übrigen Querfäden - eine Köper- oder Atlasbindung mit den Längsfäden bilden, wobei jeder zweite Querfaden dieser Gruppe hinsichtlich seiner sich aus der Köper- bzw. Atlasbindung an sich ergebenden Einbindestellen an der Oberseite der Längsfäden in Querfadenrichtung versetzt ist. Diese Modifikation einer Köper- bzw. Atlasbindung ergibt insbesondere bei einem Langen Bindungsrapport für die Querfäden der zweiten Gruppe eine gleichmäßigere Verteilung der Kreuzungsstellen an der Obeseite der Längsfäden.

Die erste Gruppe der Querfäden kann - bei fiktiver Weglassung der übrigen Querfäden - eine Leinwandbindung mit den Längsfäden bilden. Auch eine Köper- oder Atlasbindung ist möglich. Darüber hinaus kann auch eine Kombination beider Bindungsarten zweckmäßig sein, bei der von der ersten Gruppe der Querfäden jeder zweite Querfaden in Leinwandbindung und die dazwischen liegenden Querfäden dieser Gruppe in Köper- oder Atlasbindung - jeweils bei fiktiver Weglassung aller übrigen Querfäden - mit den Längsfäden verwebt sind.

In der Zeichnung ist die Erfindung an Hand von Ausführungsbeispielen näher veranschaulicht. Es zeigt:
Fig. (1) eine ausschnittweise Draufsicht auf die Oberseite eines Papiermaschinensiebs;
Fig. (2) eine ausschnittsweise Draufsicht auf die Unterseite des um eine waagerechte Achse umgeklappten Papiermaschinensiebs gemäß Fig. (1);
Fig. (3) einen ausschnittweisen Querschnitt durch das Papiermaschinensieb gemäß den Figuren (1) und (2);
Fig. (4) einen auschnittsweisen Längsschnitt durch das Papiermaschinensieb gemäß den Figuren (1) bis (3);
Fig. (5) das Papiermaschinensieb nach den Figuren (1) bis (4) in einer Patronendarstellung;
Fig. (6 und 7) weitere Ausführungsformen von Papiermaschinensieben in Patronendarstellungen.
Die Figuren (1) bis (4) zeigen ein Papiermaschinensieb (1), das aus Längsfäden (2) und Querfäden (3)

3

gewebt ist. Die Pfeile A geben dabei jeweils die Laufrichtung des Papiermaschinensiebs (1) und damit auch die Richtung der Längsfäden (2) an.

Wie insbesondere die Figuren (1) und (2) zeigen, sind die Längsfäden (2) auf zweierlei Weise mit Querfäden (3) verwoben. Bei der einen Einbindungsart erstreckt sich der Bindungsrapport der Querfäden (3') jeweils nur über zwei Längsfäden (2), d. h. die Querfäden (3') kreuzen jeweils nur einen Längsfaden (2), bevor sie durch das Papiermaschinensieb (1) auf die andere Seite gehen und dort einen weiteren Längsfaden (2) kreuzen. Auf diese Weise entstehen auf der Oberseite eine Vielzahl von kurzen Kröpfungen, die die markierarme Blattbildung, Retention und Blattabnahme begünstigen.

Die Querfäden (3) wechseln sich mit weiteren Querfäden (3") ab, deren Bindungsrapport sich über zwölf Längsfäden (2) erstreckt, wobei die Querfäden (3") zunächst einen Längsfaden (2) an der Oberseite und - nach Wechseln der Siebseite - dann nacheinander elf Längsfäden (2) an der Unterseite kreuzen. Die Querfäden (3") sollen gemäß der Erfindung einen größeren Querschnitt als die Querfäden (3') haben, was in der Zeichnung nicht zum Ausdruck kommt.

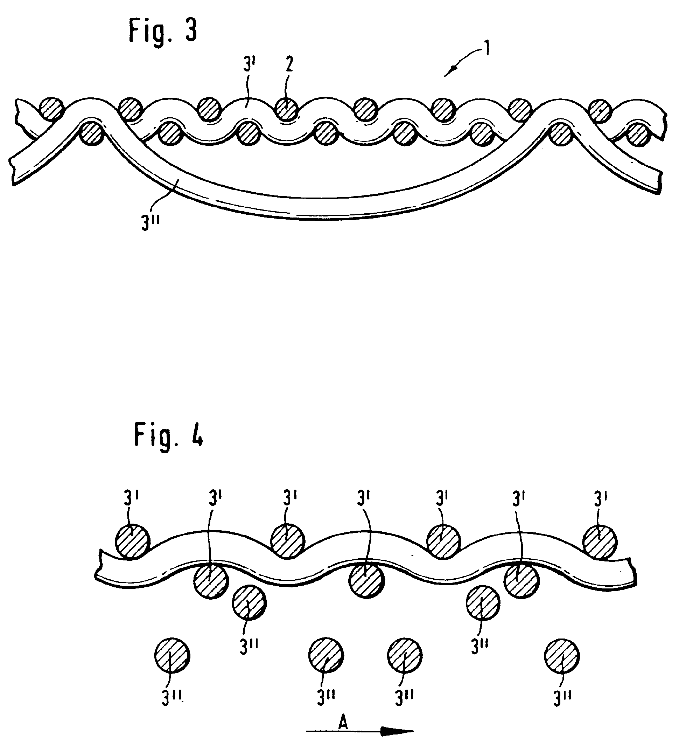

Fig. 3 zeigt noch deutlicher die unterschiedliche Einbindung der Querfäden 3' mit dem kurzen Bindungsrapport und der Querfäden 3" mit dem langen Bindungsrapport. Es ist zu erkennen, daß die erstgenannten Querfäden 3' mit den Längsfäden 2 im wesentlichen die Oberfläche, also die Blattbildungsseite des Papiermaschinensiebs 1 bilden, während die anderen Querfäden 3" langgestreckte Aufstandsflächen an der Unterseite bilden, wodurch sich eine gute Abriebfestigkeit ergibt.

Dieser Umstand ergibt sich auch aus Fig. 4, die ebenfalls deutlich macht, daß die Querfäden 3" mit dem langen Bindungsrapport praktisch die untere Begrenzung des Papiermaschinensiebs 1 bilden und somit die übrigen Querfäden 3' und insbesondere auch die Längsfäden 2, die ja die Zugkräfte aufzunehmen haben, keinem Verschleiß unterliegen.

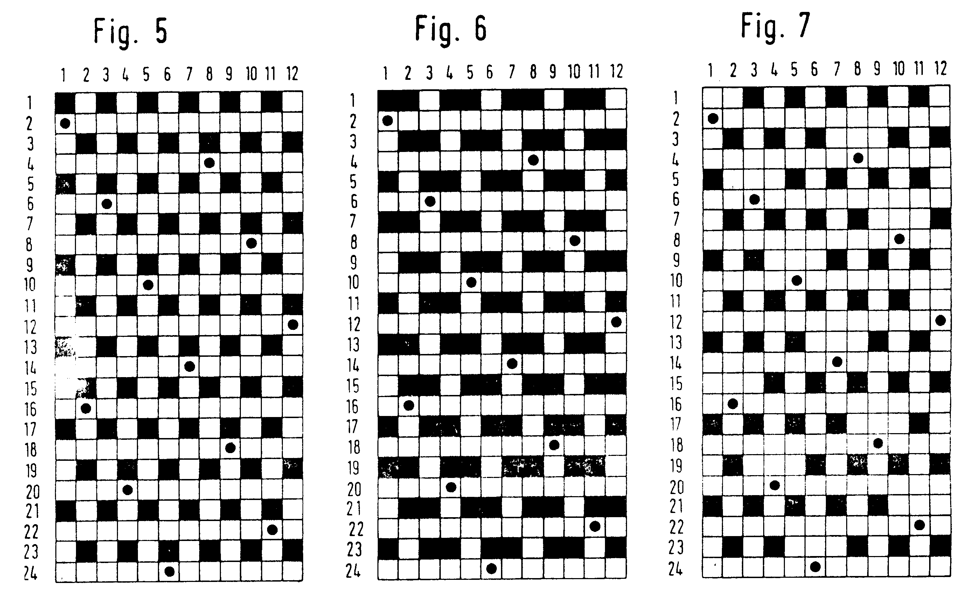

Die Fig. 5 bis 7 zeigen Ausführungsformen von Papiermaschinensieben in Form der bei Gebewebedarstellungen üblichen Patronen mit oben und seitlich angebrachten Ziffern, die die Längs- und Querreihen kennzeichnen. Dabei werden durch jede waagerechte Kästchenreihe je ein Querfaden und durch jede senkrechte Kästchenreihe je ein Längsfaden dargestellt. Jedes einzelne Kästchen bildet somit einen Kreuzungspunkt zwischen einem Längs- und einem Querfaden. Ist das Kästchen vollständig schwarz ausgefüllt oder mit einem Punkt versehen, so verläuft der betreffende Längsfaden unter dem dort kreuzenden Querfaden. Ist das Kästchen ganz freigelassen, so kreuzt der Längsfaden den dortigen Querfaden an der Oberseite des Papiermaschinensiebs.

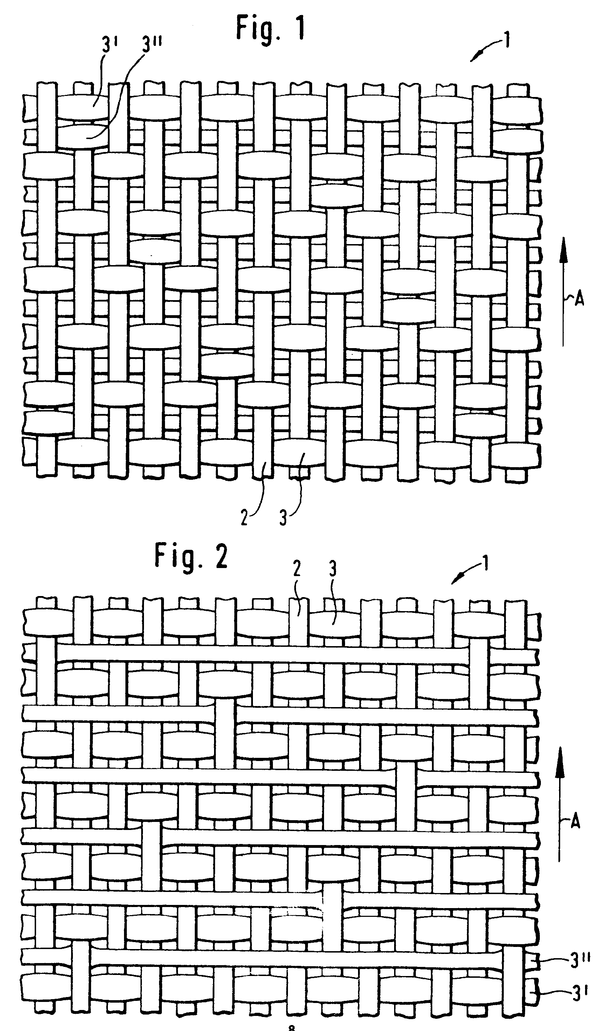

Fig. 5 stellt das Papiermaschinensieb 1 nach den Fig. 1 bis 4 dar und läßt ohne weiteres erkennen, daß die Längsfäden 2 mit den ungradzahligen Querfäden 3' einen sich nur über zwei Längsfäden 2 erstreckenden Bindungsrapport haben und damit eine Leinwandbindung bilden, angezeigt durch die schwarzen und weißen Kästchen. Dagegen sind die geradzahligen Querfäden 3" mit den Längsfäden 2 in einer Köperbindung verwebt, wie sich aus den schwarzen Punkten ersehen läßt. Dies stimmt natürlich exakt nur dann, wenn man die jeweils andere Gruppe von Querfäden 3' bzw. 3" fiktiv wegläßt.

Die geradzahligen Querfäden 3" haben einen sich über zwölf Längsfäden erstreckenden Bindungsrapport, wobei innerhalb eines Bindungsrapportes die Querfäden 3" nur einen Längsfaden an der Oberseite, die übrigen an der Unterseite kreuzen. Die Querfäden 3" sind dabei hinsichtlich ihrer Kreuzungsstellen an der Oberseite der Längsfäden 2 derart gegeneinander versetzt, daß sich von links oben nach rechts unten verlaufende Diagonalreihen bilden. Der Abstand der Diagonalreihen in Querfadenrichtung beträgt dabei vier Längsfäden 2, während der Abstand zweier Kreuzungspunkte in einer Diagonalreihe in Querfadenrichtung ein Längsfaden 2 ist. Man kann auch - läßt man die ungradzahligen Querfäden 3' einmal weg - von einer modifizierten Köperbindung sprechen, wobei die Modifikation darin besteht, daß jeder zweite Querfaden 3" hinsichtlich seiner sich aus der Köperbindung ergebenden Kreuzungsstelle an der Oberseite des Längsfadens 2 um fünf Längsfäden 2 nach rechts versetzt ist.

Bei dem in Fig. 6 dargestellten Ausführungsbeispiel hat die erste Gruppe von Querfäden, nämlich die ungradzahligen, einen sich über drei Längsfäden erstreckenden Bindungsrapport, wobei sie zwei dieser Längsfäden an der Oberseite kreuzen. Die gradzahligen Querfäden bilden jeweils sich über zwölf Längsfäden erstrekkende Bindungsrapporte, wobei sie elf an der Unterseite des Siebes kreuzen. Beide Gruppen von Querfäden bilden - läßt man die jeweils andere fiktiv weg - mit den Längsfäden Köperbindungen. Dabei ist die Einbindung der Querfäden der zweiten Gruppe identisch mit den entsprechenden Querfäden in Fig. 5, insbesondere was die Versetzung der jeweils zweiten Querfäden dieser Gruppe angeht.

Fig. 7 zeigt die Gewebepatrone eines Papiermaschinensiebs, das bis auf einen einzigen Unterschied demjenigen nach Fig. 5 entspricht. Dieser Unterschied besteht darin, daß die Leinwandbindung der gradzahligen Querfäden, also die der ersten Gruppe, nicht voll durchgebildet ist. So sind diese Querfäden entgegen der Musterregel dort nicht über einen Längsfaden geführt, wo der jeweils benachbarte, gradzahlige Querfaden über diesem Längsfaden verläuft. Der letztgenannte Querfaden ergänzt dann also praktisch die Leinwandbindung an dieser Stelle. Auf diese Weise wird vermieden, daß nebeneinander zwei Querfäden über denselben Längsfaden gehen, was zu unerwünschten Markierungen führen würde.

Ansonsten stimmt die Bindung exakt mit der nach Fig. 5 überein, so daß auf die dortige Beschreibung Bezug genommen werden kann.

Selbstverständlich kann der Grundgedanke der Erfindung auch durch andere Bindungsarten verwirklicht werden. So besteht die Möglichkeit, erst auf zwei Querfäden der ersten Gruppe einen Querfaden der zweiten Gruppe folgen zu lassen. Auch umgekehrt ist diese Folge möglich.

## Patentansprüche

1. Einlagiges Papiermaschinensieb, das aus Längs- und Querfäden aus Kunststoff gewebt ist, wobei zwei Gruppen von Querfäden vorgesehen sind, die in der ersten Gruppe (3') einen kürzeren Bindungsrapport als in der zweiten Gruppe (3") haben und wobei sich in Längsfadenrichtung gesehen eine bestimmte Anzahl von Querfäden (3') der ersten Gruppe mit einer bestimmten Anzahl von Querfäden (3") der zweiten Gruppe abwechseln, wobei die zweite Gruppe von Querfäden (3") einen Bindungsrapport bzw. Bindungsrapporte hat, der bzw. die sich insgesamt über zumindest einen Längsfaden (2) mehr erstreckt bzw. erstrecken als der Bindungsrapport bzw. die Bindungsrapporte der ersten Gruppe von Querfäden (3') und die Querfäden (3") der zweiten Gruppe die Mehrzahl der innerhalb eines Bindungsrapportes liegenden Längsfäden (2) an deren Unterseite kreuzen, dadurch gekennzeichnet, daß die erste Gruppe von Querfäden (3') einen Bindungsrapport bzw. Bindungsrapporte hat, der bzw. die sich insgesamt über maximal fünf Längsfäden (2) erstreckt bzw. erstrecken, daß die Querfäden (3") der zweiten Gruppe einen größeren Querschnitt als die der ersten Gruppe aufweisen und daß das freie inneren Volumen des Papiermaschinensiebes (1) zumindest 50% des Siebkörpervolumens ausmacht.

2. Papiermaschinensieb nach Anspruch 1, dadurch gekennzeichnet, daß die Querfäden (3") der zweiten Gruppe einen Binungsrapport bzw. Bindungsrapporte haben, der bzw. die sich insgesmt über zumindest sechs Längsfäden (2) erstreckt bzw. erstrecken.

3. Papiermaschinensieb nach Anspruch 2, dadurch gekennzeichnet, daß die Querfäden (3") der zweiten Gruppe innerhalb eines Bindungsrapportes nur einen Längsfaden (2) an dessen Oberseite kreuzen.

4. Papiermaschinensieb nach einem der Ansprüche 1 bis 3, dadurch gekennzeichnet, daß die Querfäden (3") der zweiten Gruppe innerhalb eines Bindungsrapportes mindestens fünf Längsfäden (2) nacheinander an der Unterseite kreuzen.

5. Papiermaschinensieb nach einem der Ansprüche 1 bis 4, dadurch gekennzeichnet, daß die Querfäden (3') der ersten Gruppe einen sich über insgesamt zwei Längsfäden (2) erstreckenden Bindungsrapport haben.

6. Papiermaschinensieb nach einem der Ansprüche 1 bis 5, dadurch gekennzeichnet, daß die Querfäden (3") der zweiten Gruppe einen sich über insgesamt acht bis zwölf Längsfäden (2) erstreckenden Bindungrapport haben.

7. Papiermaschinensieb nach einem der Ansprüche 1 bis 6, dadurch gekennzeichnet, daß an den Stellen, an denen ein Querfaden der zweiten Gruppe einen Längsfaden an der Oberseite kreuzt, zumindest ein benachbarter Querfaden der ersten Gruppe, der nach dem Bindungsrapport an sich diesen Längsfaden ebenfalls an der Oberseite kreuzen müßte, unter diesem Längsfaden geführt ist.

8. Papiermaschinensieb nach einem der Ansprüche 1 bis 7, dadurch gekennzeichnet, daß sich in Längsfadenrichtung gesehen höchstens zwei Querfäden (3') der ersten Gruppe mit höchstens zwei Querfäden (3") der zweiten Gruppe abwechseln.

9. Papiermaschinensieb nach einem der Ansprüche 1 bis 8, dadurch gekennzeichnet, daß die Querfäden (3") der zweiten Gruppe - bei fiktiver Weglassung der übrigen Querfäden (3) - eine Köper- oder Atlasbindung mit den Längsfäden (2) bilden, wobei jeder zweite Querfaden (3") dieser Gruppe hinsichtlich seiner sich aus der Köper- bzw. Atlasbindung an sich ergebenden Kreuzungsstellen an der Oberseite der Längsfäden (2) in Querfadenrichtung versetzt ist.

10. Papiermaschinensieb nach einem der Ansprüche 1 bis 9, dadurch gekennzeichnet, daß die erste Gruppe der Querfäden (3") - bei fiktvier Weglassung der übrigen Querfäden (3") - mit den Längsfäden eine Leinwandbindung bilden.

11. Papiermaschinensieb nach einem der Ansprüche 1 bis 9, dadurch gekennzeichnet, daß die erste Gruppe der Querfäden (3') - bei fiktiver Weglassung der übrigen Querfäden (3") - mit den Längsfäden eine Köper- oder Atlasbindung bilden.

12. Papiermaschinensieb nach einem der Ansprüche 1 bis 9, dadurch gekennzeichnet, daß von der ersten Gruppe der Querfäden jeder zweite Querfaden in Leinwandbindung und die dazwischenliegenden Querfäden dieser Gruppe in Köper- oder Atlasbindung - jeweils bei fiktiver Weglassung aller übrigen Querfäden - mit den Längsfäden verwebt sind.

**Claims**

1. Single layer paper machine wire which is woven with longitudinal threads and cross threads in plastic, in which two groups of cross threads are provided, having in the first group (3′) a shorter repeat of pattern than in the second group (3″) and in which, in the longitudinal thread direction, a definite amount of cross threads (3′) of the first group alternate with a definite amount of cross threads (3″) of the second group in which the second group of cross threads (3″) has a repeat of pattern of repeats of pattern extending itself, respectively themselves, over altogether at least one more longitudinal thread (2) than the repeat of pattern or repeats of pattern of the first group of cross threads (3′) and in which the cross threads (3′) of the second group cross the majority of longitudinal threads (2) at their bottom side within a repeat of pattern, characterized by the fact that the first group of cross threads (3′) has a repeat of pattern or repeats of pattern extending itself, respectively themselves, over altogether a maximum of 5 longitudinal threads (2), the cross threads (3″) of the second group have a larger cross section than the ones of the first group and the free internal volume of the paper machine wire (1) makes out at least 50% of the wire body volume.

2. Paper machine wire according to requirement 1, characterized by the fact that the cross threads (3″) of the second group have a repeat of pattern or repeats of pattern extending itself, respectively themselves, over altogether at least 6 longitudinal threads (2).

3. Paper machine wire according to requirement 2, characterized by the fact that the cross threads (3″) of the second group cross within a pattern repeat only on longitudinal thread (2) at its top side.

4. Paper machine wire according to one of the requirements 1 to 3, characterized by the fact that the cross threads (3″) of the second group cross, within a pattern repeat at least five longitudinal threads (2) after each other at the bottom side.

5. Paper machine wire according to one of the requirements 1 to 4, characterized by the fact that the cross threads (3′) of the first group have a pattern repeat extending itself only over altogether two longitudinal threads (2).

6. Paper machine wire according to one of the requirements 1 to 5, characterized by the fact that the cross threads (3″) of the second group have a pattern repeat extending itself over altogether eight to twelve longitudinal threads (2).

7. Paper machine wire according to one of the requirements 1 to 6, characterized by the fact that, at the spots where a cross thread of the second group crosses a longitudinal thread at the top side, at least a neighbouring cross thread of the first group which, according to the binding relation, should also cross that longitudinal thread at the top side, runs under the latter.

8. Paper machine wire according to one of the requirements 1 to 7, characterized by the fact that in the long thread direction, maximum two cross threads of the first group (3′) alternate with maximum two cross threads (3″) of the second group.

9. Paper machine wire according to one of the requirements 1 to 8, characterized by the fact that the cross threads (3″) of the second group, if the others are fictiously left out, form a long crimp texture or Atlas texture with the longitudinal threads (2), in which every second cross thread (3″) of that group is displaced in the long thread direction in view of the crossing points at the top side of the longitudinal threads (2), resulting from the long crimp or Atlas texture.

10. Paper machine wire according to one of the requirements 1 to 9, characterized by the fact that the first group of cross threads (3′), if the other cross threads (3″) are fictitiously left out, forms a screen texture with the longitudinal threads (2).

11. Paper machine wire according to one of the requirements 1 to 10, characterized by the fact that the first group of cross threads (3′), if the other cross threads (3″) are left out, forms a long crimp texture or Atlas texture with the longitudinal threads (2).

12. Paper machine wire according to one of the requirements 1 to 11, characterized by the fact that, out of the first group of cross threads, every second cross thread is woven in screen texture with the longitudinal threads and the cross threads lying between the others of that group are woven in long crimp or Atlas texture with the longitudinal threads, if the remaining cross threads are fictitiously left out.

**Revendications**

1. Toile de machine à papier monocouche, tissée à partir de fils longitudinaux et de fils transversaux en fibres synthétiques où deux groupes de fils transversaux sont prévus gui, dans le premier groupe (3′) présentent un rapport d'armure plus court que dans le second groupe (3″) et où, observé dans le sens des fils longitudinaux, un un nombre déterminé de fils transversaux (3′) du premier groupe alternent avec un nombre déterminé de fils transversaux (3″) du second groupe, et où un second groupe de fils transversaux (3″) présente un rapport d'armure ou des rapports d'armure s'étendant globalement au minimum sur un fil longitudinal (2) de plus que le rapport ou les rapports d'armure du premier groupe des fils transversaux (3′), les fils transversaux (3″) du second groupe croisant, dans ce cas, à leur face inférieure la pluspart des fils longitudinaux (2) situés à l'intérieur d'un rapport d'armure, charactérisée par le fait que le premier groupe de fils transversaux (3′) présente un rapport d'armure ou des rapports d'armure s'etendant au total sur cinq fils longitudinaux (2) au maximum, les fils transversaux (3″) du second groupe présentent une section transversale supérieure à ceux du premier groupe et le volume libre intérieur de la toile de machine à papier (1) correspond au minimum à 50% du volume du corps de la toile.

2. Toile machine à papier selon la revendication 1, caractérisée par le fait que les fils transversaux (3″) du second groupe présentent un rapport ou des rapports d'armure s'etendant au total sur six fils longitudinaux (2) au minimum.

3. Toile de machine à papier selon la revendication 2, caractérisée par le fait que les fils transversaux (3″) du second groupe ne croisent à l'intérieur d'un rapport d'armure qu'un seul fil longitudinal (2) à sa surface.

4. Toile de machine à papier selon l'une des revendications 1 à 3, caractérisée par le fait que les fils transversaux (3″) du second groupe croisent, sur le côté inférieur, successivement cinq fils longitudinaux (2) à l'intérieur d'un rapport d'armure au minimum.

5. Toile de machine à papier selon l'une des revendications 1 à 4, caractérisée par le fait que les fils transversaux (3′) du premier groupe présentent un rapport d'armure s'etendant sur seulement deux fils longitudinaux (2), au total.

6. Toile de machine à papier selon l'une des revendications 1 à 5, caractérisée par le fait que les fils transversaux (3″) du second groupe présentent un rapport d'armure gui s'étend sur huit à douze fils longitudinaux (2), au total.

7. Toile de machine à papier selon l'une des revendications 1 à 6, caractérisée par le fait qu'aux endroits où un fil transversal du second groupe croise à la surface un fil longitudinal, un fil transversal contigu au minimum du premier group qui, normalement, doit conformément au rapport d'armure croiser lui aussi, à la surface, ce fil longitudinal, doit être passé au-dessous de ce fil longitudinal.

8. Toile de machine à papier selon l'une des revendications 1 à 7, caractérisée par le fait que, observé dans le sens des fils longitudinaux, au maximum deux fils transversaux (3′) du premier groupe alternent avec au maximum deux fils transversaux (3″) du second groupe.

9. Toile de machine à papier selon l'une des revendications 1 à 8, caractérisée par le fait que les fils transversaux (3″) du second groupe - en supprimant les autres fils transversaux (3) - forment avec les fils longitudinaux (2) un croisé ou un armure satin, dans ce cas, un fils transversal (3″) sur deux de ce groupe sera alors décroché dans le sens des fils transversaux, conformément aux points de croisement produits à la surface des fils longitudinaux (2) à partir du croise ou de l'armure satin.

10. Toile de machine à papier selon l'une des revendications 1 à 9, caractérisée par le fait que le premier groupe de fils transversaux (3′) produit avec les fils longitudinaux (2) une armure toile - en supprimant fictivement les autres fils transversaux (3″).

11. Toile de machine à papier selon l'une des revendications 1 à 10, caractérisée par le fait que le premier groupe de fils transversaux (3′) produit avec les fils longitudinaux (2) un croisé ou une armure satin - en supprimant fictivement les autres fils transversaux (3″).

12. Toile de machine à papier selon l'une des revendications 1 à 11, caractérisée par le fait qu'en ce qui concerne le premier groupe de fils transversaux, un fil transversal sur deux sera tissé avec les fils longitudinaux en armure toile et les fils transversaux s'y intercalant, en croisé ou en armure satin - en supprimant respectivement et fictivement les fils transversaux restants.

# Fig. 1

# Fig. 2

Fig. 3

3'    2         1

3''

Fig. 4

3'    3'    3'    3'    3'    3'    3'

3''      3''

3''    3''    3''    3''

A

Fig. 5

Fig. 6

Fig. 7